# EUROPEAN PATENT SPECIFICATION

(11) **EP 3 157 360 B1**
(45) Date of publication and mention of the grant of the patent: **15.08.2018**
(21) Application number: 15732979.8
(22) Date of filing: 05.06.2015
(51) Int. Cl.: A23L 19/12, A23N 7/02, A23N 15/00, B07C 5/342

(54) **METHOD FOR PROCESSING POTATOES**
VERFAHREN ZUR VERARBEITUNG VON KARTOFFELN
PROCÉDÉ DE TRAITEMENT DE POMMES DE TERRE

(30) Priority: 06.06.2014 NL 2012969
(43) Date of publication of application: 26.04.2017
(73) Proprietor: Kroef, Bart, 5409 SX Odiliapeel (NL)
(72) Inventor: KROEF, Bart, NL-5409 SX Odiliapeel (NL); KANTERS, Wilhelmus Petrus, NL-5801 CC Venray (NL)
(74) Representative: Algemeen Octrooi- en Merkenbureau B.V.
(86) International application number: PCT/NL2015/050409
(87) International publication number: WO 2015/187021

(56) References cited:
- CN-A- 103 592 316
- DE-A1- 2 630 930
- DE-A1- 4 419 699
- GB-A- 1 299 009
- US-A- 5 858 429
- US-A1- 2003 056 627

## Description

The present invention relates to a method for processing potatoes, comprising the steps of providing potatoes and possibly removing the skin from the aforesaid potatoes before further processing of the potatoes takes place.

After rice, wheat and maize, potatoes are the world's most important staple food. Potatoes are transported from the field to the factory, at which stage there is still a lot of soil clinging to the potatoes. Raw potatoes are generally sold in their skins, with peeling taking place at the consumers' homes. The soil clinging to the potatoes is removed by spraying with water, for example, but washing can also be done by placing the potatoes in rotating drums fitted with brushes. Stones may be present among the potatoes, which stones are removed by means of a stone removing device. The thus pre-processed potatoes are now clean enough for peeling. To reduce the boiling, frying or deep-frying time during further processing or at the consumers' homes, the potatoes may be blanched. Raw, unpeeled potato products are packaged in open nets or open plastic bags.

Potatoes are known to have eyes. In fact, such eyes are buds which can each form a new plant a next year. Furthermore, the potatoes may comprise other unwanted elements, such as wireworms, rust, blackening and scab. The aforesaid unwanted elements are not appreciated by consumers and must be removed from the potatoes, therefore. The removal of eyes, for example, can take place manually, although it is a labour-intensive affair. It is also possible, however, to inspect the already peeled potatoes visually and separate potatoes with eyes from those without eyes. However, such a process leads to a large amount of potatoes with eyes, which are subsequently processed further as an inferior product, for example as animal feed. Various products that become available during the processing of potatoes are intended for use as animal feed, viz. potato shreds, steam-peeled potato skins, potato granulate and potato flakes.

From US patent No. 6,321,484 there is known an apparatus in which potatoes are cut using a laser beam. From US patent No. 3,677,827 there is furthermore known a potato cutting machine in which the potato to be cut is passed between two rollers that rotate in opposite directions, wherein the potato, having exited the space between rollers, is passed through a knife so as to be cut into two equal parts. Apparatuses for cutting potatoes are furthermore known from US patents Nos. 3,090,414 and 5,331,874.

British publication GB 1 299 009 relates to a method for the manufacture of packs containing dry, pre-cooked potatoes, wherein the potatoes, after being subjected to steam-peeling, are inspected using photoelectric means, wherein good potatoes are separated from potatoes that still comprise defective elements. The potatoes that comprise defective elements are subsequently fed to the steam peeling installation again.

Chinese publication CN 103 592 316 relates to a method for identifying the quality of potatoes, wherein potatoes, after being subjected to steam peeling, are pre-heated, after which an infrared camera takes pictures, which are transmitted to a computer, which processes and analyses the thermal images so as to be able to determine which potato can be regarded as a so-called defective potato, so that the aforesaid document only shows how low quality potatoes can be identified.

German Offenlegungsschrift DE 44 19 699 relates to a method for assessing good quality potatoes, wherein the potatoes, after being steam-peeled, are cut into small pieces, after which the potatoes thus cut into small pieces are preferably led through an electronic loading station (not specified), in which damaged parts are mechanically sorted out and good quality parts are subsequently subjected to further processing.

US patent No. 5,858,429 relates to a potato peeling machine, in which the results/performance of the peeling operation can be improved through the use of a so-called "vision analysis system (VAS)", wherein a camera takes photographs and the number of dark pixels in each photograph is determined. The number of dark pixels thus obtained is passed to a processor, after which the peeling space is adjusted such that the desired level of peeling of the potato will take place.

US 2003/056627 relates to a post-harvest specified vegetable processing process comprising a step consisting of supplying and conveying the vegetables in a line, such that each vegetable is oriented in a specified direction, a step consisting of detecting and analysing each vegetable, a step consisting of processing each vegetable according to the analysis of the vegetable, said processing step consisting of at least one cutting or removal operation of at least one specified portion of the vegetable using at least one tool comprising two jaws.

One aspect of the invention is to provide a method for processing potatoes in which potatoes comprising the aforesaid unwanted elements are usefully reused.

Yet another aspect of the invention is to provide a method for processing potatoes wherein potatoes are subdivided into "good" and "bad" potatoes at high speed, after which the "bad" potatoes are additionally treated so as to minimize the amount of inferior residual product.

The invention according to the present application thus relates to a method for processing potatoes, comprising the provision of potatoes and the possible removal of the skin before further processing of the potatoes takes place, which method comprises the following steps:
ia) cutting potatoes and putting said potatoes thus cut on a conveyor belt;
ib) visually monitoring said cut potatoes for defects;
ii) grading potatoes as visually approved potatoes and visually rejected potatoes on the basis of step ib);
iii) separating the visually approved potatoes from the visually rejected potatoes;
iv) subjecting the aforesaid visually rejected potatoes to further treatment, comprising the selective removal of defective elements from the visually rejected potatoes by using one or more cutting means selected from the group of water jet, laser jet, drill, cutting dies and knife so as to obtain additionally treated potatoes and potatoes comprising defective elements;
v) subjecting the aforesaid additionally treated potatoes to further processing, wherein step iv) comprises taking one or more digital images of visually rejected potatoes, analysing the one or more digital images, positioning the cutting means on the basis of said one or more analysed digital images and selectively removing defective elements from the visually rejected potatoes by cutting out the aforesaid defective elements, wherein the aforesaid one or more cutting means are brought into contact with the aforesaid, visually rejected potatoes.

Based on the above-described method, one or more aspects of the invention are achieved. Consequently, the present method can be regarded as a process that is carried out on an industrial scale, in particular in a continuous process.

It is in particular desirable that the potatoes that have been subjected to step ib) comprise potatoes whose skin has been removed. Such a preferred embodiment can therefore be regarded as comprising the steps of first removing the skin from the potatoes, possibly unwanted elements, such as stones and soil clinging to the potatoes, which may be encountered upon harvesting potatoes have been removed, after which the thus skinned potatoes are subjected to further processing in accordance with the present method.

The present invention in particular relates to the selective removal of the defective potatoes, thereby preventing the removal of undesirably large amounts of potatoes that do not comprise any defective elements. The use of the present method thus has an advantageous effect on the eventual potato yield. In other words, only the defective elements of the visually rejected potatoes are selectively removed, so that a residual part of the potato which is still suitable for further processing, for example for consumption purposes, will remain. In the present method it is thus preferable if the potatoes are subjected to steam peeling only once, which is different from, for example, the method according to the above-discussed British publication GB 1 299 009, in which the previously steam-peeled potatoes are subjected to the steam peeling step once again upon detection of defective elements. Such a "double" steam-peeling operation will not have a beneficial effect on the taste and the boiling and frying behaviour of the potato that is eventually obtained.

In particular, the potatoes, whose skin may or may not have been removed first, are visually assessed in step ib) in order to be able to subsequently bring about a separation between a group of visually approved potatoes and a group of visually rejected potatoes. Such a separation is carried out by removing the visually rejected potatoes by pushing them aside using air, a push rod, a water jet or a combination thereof. The visually approved potatoes subsequently undergo a usual further processing step. The visual assessment takes place by taking one or more digital images of the peeled or unpeeled potatoes, analysing said one or more digital images, positioning a device for bringing about the separation by pushing aside using air, a pusher rod, a water jet or a combination thereof, and subsequently removing the group of visually rejected potatoes. In this way a flow of visually rejected potatoes and a flow of visually approved potatoes are obtained. The aforesaid positioning takes place by analysing the digital images, using software, which software is capable of identifying regions that can be regarded as undesirable, after which the device for bringing about the separation can be positioned so that the potatoes to be rejected are separated from the potatoes to be approved.

The group of visually rejected potatoes is further treated in step iv) in that the defective elements are removed, thus obtaining an amount of potatoes which, just like the previously obtained visually approved potatoes, can subsequently be subjected to the usual further processing. By selectively removing the defective elements a residual flow is thus obtained, which flow is also indicated by the phrase "potatoes comprising defective elements" herein, which flow can be yet further processed, for example as animal feed. It is clear, therefore, that by using the present method the latter residual flow will be significantly smaller than the amount of potatoes graded as "visually rejected potatoes" in step iii).

The selective removal of defective elements according to step iv) is carried out by using one or more cutting means selected from the group of water jet, laser jet, drill, cutting dies and knife.

According to the present method step iv) comprises taking one or more digital images of visually rejected potatoes, analysing the one or more digital images, positioning the cutting means on the basis of said one or more analysed digital images and selectively removing defective elements from the visually rejected potatoes by cutting out the aforesaid defective elements, wherein the aforesaid one or more cutting means are brought into contact with the aforesaid, visually rejected potatoes.

The purpose of taking of one or more digital images of visually rejected potatoes is to make a precise determination of regions that exhibit one or more defects. Using software, a digital image is analysed, which software is capable of identifying regions that are regarded as undesirable, in particular the regions in which one or more defective elements that are to be removed are present. Based on the aforesaid analysis, one or more cutting means are positioned so that only the unwanted region of the visually rejected potatoes is cut away therefrom. This means that the group of visually rejected potatoes is now subdivided into a so-called group of "good" potatoes, herein also referred to as "additionally treated potatoes", and a group of bad potatoes, herein also referred to as "potatoes comprising defective elements".

It is desirable that subsequently the aforesaid group of "good" potatoes is separated from the aforesaid group of "bad" potatoes, for example by passing the thus additionally treated potatoes over a number of rollers positioned one behind another, wherein the interspace between the rollers is variable. The effect of such an interspace is that small parts fall down between the rollers under the influence of the force of gravity, and thus it is assumed that the group of "bad" potatoes, which will generally consist of small potato parts, will be separated from the group of "good" potatoes, herein also referred to as "additionally treated potatoes".

In certain embodiments it is desirable however, that the step iv) in question further comprises visually monitoring the thus additionally treated potatoes (again) and separating, on the basis of the visual monitoring step thus carried out, the defective elements that have been cut away by the aforesaid one or more cutting means. In such a situation the flow of "good" potatoes, which may still comprise a few "bad" potatoes that were not graded as such in a previous step, is subjected to a visual monitoring step once again, wherein the flow comprising defective elements, viz. the "bad" potatoes, is separated from the flow of "good" potatoes. In a special embodiment it is desirable that the aforesaid additional treatment is carried by the installation in which the above-discussed steps ia)-iii) take place.

In a special embodiment it is preferable that the one or more cutting means comprise one or more cutting dies. The use of such cutting dies is desirable in particular from the viewpoint of a uniform cutting force and uniform positioning possibilities. In certain embodiments it is in particular desirable that the one or more cutting dies are circular in shape. Such a circular shape provides a possibility of cutting away defective elements in such a manner that the natural shape of the potato is more or less retained. Furthermore, when a cutting die having a circular shape is used, no complex positioning operations of the cutting means are needed. After all, the circular shape has the same position at all times, which is advantageous in particular at high production rates. A specific rotation step for cutting away the defective element in question is thus not needed. It is in particular desirable that the circumferential dimension of the one or more cutting means is larger than the circumferential dimension of the object to be cut, in particular the potato, or of shapes derived therefrom, for example slices, cubes, sections and sticks. In this way the unwanted parts of the potato can be selectively cut away in a quick and efficient manner.

In certain embodiments it is desirable to use a knife with an obtuse/large angle. Such an embodiment makes it possible in practice for the cut-of pieces to be "pushed aside or split". When such an embodiment is used, there is no need for the knife to cut through the entire potato. After all, when the potato is entirely cut through the surface on which the potato is present during the cutting operation, usually a conveyor belt, may be damaged. The selective removal of the unwanted defective elements of the potato takes place by moving the knife only partially into the potato.

In certain embodiments it is desirable that the aforesaid circular shape is circumferentially provided with one or more projections. Such projections are advantageous in particular for reducing the cut-away defective elements in advance, so that the subsequent separation between "good" potatoes and "bad" potatoes can take place more easily.

It is also possible, however, for the one or more cutting dies to have a star-shaped configuration. When such a star-shaped configuration is used, the potato will practically entirely be cut into several smaller parts, so that the subsequent separation between "good" potatoes and "bad" potatoes can take place more easily.

According to a special embodiment of the present method, it is preferable that the step of bringing the aforesaid one or more cutting means into contact with the aforesaid visually rejected potatoes is carried out in such a manner that the contact with cutting means of the circular cutting die type takes place at an earlier stage than the contact with cutting means of the type selected from star shape and circular shape circumferentially provided with one or more projections. In such a situation the previous cutting operation carried out with cutting means of the circular cutting die type will result in a potato which will more or less retain its natural shape, after which the parts that have been cut away therefrom can be subjected to an additional cutting operation.

It is also possible to control the one or more cutting means separately on the basis of the previously discussed software analysis, so that certain unwanted regions of the visually rejected potatoes can be cut away by a cutting means specially selected for that purpose. Using software, the digital image is analysed, and on the basis of said analysis it may be decided to subject the potato only to the cutting operation of, for example, a cutting means of the circular type circumferentially provided with one or more projections. It is also possible, based on the software analysis, to subject the potato first to a cutting operation using a circular cutting die circumferentially provided with one or more projections and subsequently to a cutting operation using a star-shaped cutting die. It is desirable that the projections are spaced some distance apart so as to prevent from undesirable "sticking" of the cut-away parts. After all, after the cutting operation, the cutting die will be moved from the cut potato to a next potato for carrying out a new cutting operation on the basis of the software analysis of the digital images.

It is in particular desirable that the step of bringing the cutting means of the star-shaped type into contact is carried out only on the defective elements that were previously cut away by the aforesaid one or more cutting means. The cutting operation with cutting means of the star-shaped type will result in a number of smaller parts, which smaller parts can be easily separated from larger part.

After the selective cutting away of the unwanted parts, the flow of potatoes, in which the unwanted parts have been cut away from the still "good" parts, is additionally separated into a flow of cut-away defective elements and a flow of good potatoes. Said separation preferably takes place by passing the combined flow over a set of rollers with varying interspaces, wherein the smaller parts, in particular the cut-away defective elements, fall through said interspaces. The thus obtained flow of parts that are still "good" can additionally be separated into a flow of "good" parts and a flow of "defective" parts. The later separation can for example take place as discussed before, viz. a visual assessment for subsequently bringing about a separation into a group of visually approved potatoes and a group of visually rejected potatoes. Such a separation is carried out by removing the visually rejected potatoes by pushing them aside using air, a push rod, a water jet or a combination thereof.

In a special embodiment of the present method, it is desirable that step ib) is carried out by irradiating the peeled or unpeeled potatoes with UV light or IR light and measuring the reflection, after which grading takes place in step ii) on the basis of the measured reflection. After said grading, the peeled or unpeeled potatoes are subdivided in step iii) into a group of visually approved potatoes and a group of visually rejected potatoes.

Following that, step iv) is carried out, preferably by irradiating the visually rejected potatoes with UV light or IR light, measuring the reflection and subsequently removing defective elements from the visually rejected potatoes on the basis of the thus measured reflection. The defective elements are to that end cut away, which process includes bringing the cutting means into contact with the defective elements to be removed.

The phrase "defective elements to be removed" is understood to include in particular the aforesaid unwanted elements, preferably selected from the group of wireworms, rust, blackening, scab and eyes.

In a particular embodiment of the present method, it is desirable that the potatoes, in particular the peeled or unpeeled potatoes, are sliced before step ib) is carried out.

In another embodiment of the present method, it is preferable that the potatoes, in particular the peeled or unpeeled potatoes, are chipped before step ib) is carried out.

The cutting of the potatoes can take place in a fully automated process, wherein the potato can be cut into several shapes, such as slices, cubes, sections or chips. The potatoes can be passed through knives in order to be cut. To increase the effectiveness of the cutting operation and obtain an improved cut surface of the potatoes, the knives are preferably placed one behind another. By preferably transporting the potatoes in a water flow, the potatoes are correctly positioned for the knives. Because new cut surfaces are created when cutting takes place, cells are damaged and starch is released. Because the potatoes are transported in water, the starch is directly washed off. It is also possible, however, to cut the potatoes without using water.

Removing the skin from the potatoes is preferably carried out while steam is being supplied. In this process, the potato is exposed to unsaturated steam. This causes the skin to come loose, which skin is removed from the potato in a drum. Steam peelings are produced during the process of washing and treating the potatoes with steam. Steaming causes the skin to come loose. When used as pig feed, the steam peelings are cut up and possibly treated with enzymes. In another embodiment, the removal of the skins takes place by rotating the potatoes in a drum with a perforated wall, which process is also referred to as mechanical peeling. The skin is removed as a result of friction with the wall and mutual friction between the potatoes. The skin is discharged through perforations in the drum wall. Mechanical peeling can also be carried out by means of knives or carborundum rollers, for example. The present invention is by no means limited to a particular form of peeling. In certain embodiments, a peeling step can be omitted. In addition to that it is possible in the present invention for the peeling step to be carried out by a company other than the company that carries out the present selection of the potatoes.

To remove skin and starch residue, the potatoes are washed after the skin has been removed. The skin sticking to the potato is removed by a water jet. Peeling has slightly affected the cells of the potatoes, and the sticky starch that is present in the cells is released during this process. Spraying also prevents the potatoes from sticking together at a later stage.

To realise a high processing speed the peeled or unpeeled potatoes are placed on a conveyor belt, after which the potatoes present on the conveyor belt are subjected to step ib).

The method of the present invention is used to clear a potato of defective elements, preferably selected from the group of wireworms, rust, blackening, scab and eyes. Such a potato has preferably been processed into one or more of slice, cube, chip and section, but the obtained potato may also have retained its original shape. The potato obtained by carrying out the method as described in the foregoing has preferably been subjected to steam peeling only once, in particular so as to retain the taste, boiling and frying behaviour of the eventually obtained potato.

In order to reduce the boiling, frying or deep-frying time upon further processing, the potato products can be blanched, with the products being kept at a high temperature (98 °C) for a short period of time (at most a few minutes). Blanching lowers the germ count, reduces the processing time and inactivates enzymes.

Raw unpeeled potato products are packaged in open nets or open plastic bags. Peeled and processed potatoes are packaged in closed plastic bags, preferably in a protective gas atmosphere, especially with a reduced oxygen content and an increased carbon dioxide content. Also vacuum packaging is used. Both packaging methods increase the shelf life.

The present invention will now be explained in more detail by means of an example, in which connection it should be noted, however, that the invention is not limited to such a special example.

The appended figure schematically shows an embodiment of the present invention, which merely serves to illustrate the invention, not to limit the scope thereof.

### Example 1

From an amount of potatoes, unwanted elements such as stones, soil clinging to the potatoes and the like are removed in a preparatory treatment 1. Subsequently, the skin is removed from the cleaned or pre-processed potatoes 12, using a steam peeling device 2, which manner of peeling should not be regarded as limitative. It is not desirable that the peeled potatoes are subjected to a new peeling step at any time during the process to be described hereinafter.

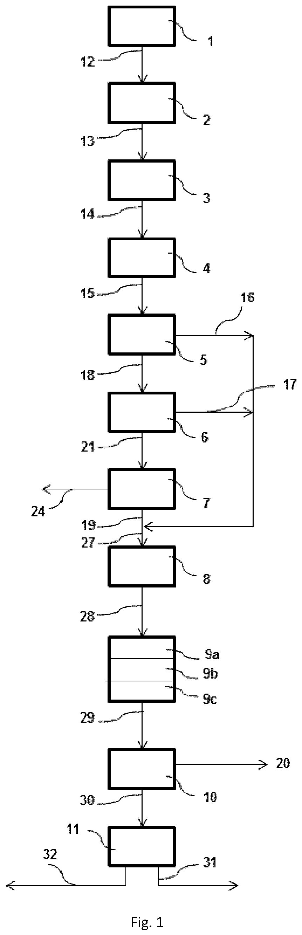

According to the schematic representation in figure 1, the potatoes 13, from which the skin has thus been removed, are sliced in the cutting means 3 and put on a conveyor belt. It will be understood that the cutting of the potatoes into slices must not be construed as limitative, but that also other forms, such as cubes, chips, viz. sticks, and sections can be obtained in the cutting means 3. The conveyor belt with the sliced potatoes 14 is passed through a monitor 4, where visual recordings of the sliced potatoes are made. Based on those recordings, the flow of potatoes 15 thus supplied is separated in the separation installation 5 into a flow of visually approved potatoes 18 and a flow of visually rejected potatoes 16. In the figure it is indicated that the flow of visually approved potatoes 18 is subjected to a new separating step in the separation installation 6. In the separation installation 6, a flow of visually approved potatoes 21 and a flow of visually rejected potatoes 17 are formed. An additional separating step is carried out on the visually approved potatoes 21 in the separation installation 7, in which a flow of visually approved potatoes 24 and the flow of visually rejected potatoes 19 are obtained. The flows 16, 17 and 19 are combined into a flow 27 and supplied by means of a conveyor belt to an apparatus 8, which takes digital images of the flow 27 of visually rejected potatoes. Using a computer and software, the images are analysed, on the basis of which analysis the cutting means 9 is controlled. The cutting means may comprise three separate cutting stations, with cutting knives of the circular type being used in cutting station 9a, cutting knives of the circular type provided with projections being used in cutting station 9b and cutting knives of the star-shaped type being used in cutting station 9c. The cutting stations 9a, 9b and 9c are disposed downstream of the apparatus 8 that takes the digital images. The thus analysed potato slices 28 present on the conveyor belt are transported to the cutting means 9, in particular the cutting stations 9a, 9b and 9c, which cutting stations are controlled on the basis of the analyses carried out by the computer and software. In the cutting stations 9a, 9b and 9c, three different types of cutting dies are used, with the first cutting operation being carried out by circular cutting dies in the cutting station 9a. If desired, the obtained sliced parts exhibiting defects can be subjected to a further cutting operation in the cutting station 9b, using a circular cutting die circumferentially provided with one or more projections. It is also possible to carry out only one type of cutting operation in the cutting means 9, for example using a circular cutting die circumferentially provided with one or more projections.

After the defective elements have been selectively cut away, so-called "loose" defective elements and "good" potato slices are present in the flow 29 on the conveyor belt. Such "loose" defective elements are discharged by passing the flow 29 of defective elements and good potato slices through a separating station 10, for example a sliver remover, where the smaller parts 20 are discharged through the interspaces between the rollers. The thus obtained flow 30 of good potato slices that do not fall through the interspaces between the rollers is additionally passed through a separating station 11, where a separation into a flow 32 of good potatoes and a flow 31 of the effective potatoes takes place. The separating station 11 is preferably controlled in the same manner as the separation installations 5, 6, 7.

The flow 32 can be further processed, together with the flow 24, in a usual manner. Although mention is consistently made of potato slices in the above-discussed example, it should be understood that the invention is not limited thereto. Although mention is made in the description of the figures of three separation installations 5, 6 7, it should be understood that the invention is not limited to a special number of separation installations. Furthermore, it may be decided not to use a separating station 11 in certain embodiments and pass the flow 30 through one of the separation installations 5, 6 and 7. Furthermore, the cutting means 9 is not limited to a special number of cutting stations.

### Example 2

The same operations as in example 1 were carried out, with this difference that the potatoes subjected to a preparatory treatment were not subjected to a peeling step. Thus, no use was made of a steam peeling device 2, but the cleaned or pre-processed potatoes 12 were directly supplied to the cutting means 3, after which the subsequent steps as described in Example 1 were carried out. If desired, the good potatoes obtained in the flow 24 and the flow 32 could be additionally subjected to a peeling step (not shown).

## Claims

1. A method for processing potatoes, comprising the provision of potatoes and the possible removal of the skin from said potatoes before further processing of the potatoes takes place, which method comprises the following steps:
ia) cutting potatoes and putting said potatoes thus cut on a conveyor belt;
ib) visually monitoring said cut potatoes for defects;
ii) grading potatoes as visually approved potatoes and visually rejected potatoes on the basis of step ib);
iii) separating the visually approved potatoes from the visually rejected potatoes, wherein said separation is carried out by removing the visually rejected potatoes by pushing them aside using air, a push rod, a water jet or a combination thereof;
iv) subjecting the aforesaid visually rejected potatoes to further treatment, comprising the selective removal of defective elements from the visually rejected potatoes by using one or more cutting means selected from the group of water jet, laser jet, drill, cutting dies and knife so as to obtain additionally treated potatoes and potatoes comprising defective elements;
v) subjecting the aforesaid additionally treated potatoes to further processing, wherein step iv) comprises taking one or more digital images of visually rejected potatoes, analysing the one or more digital images, positioning the cutting means on the basis of said one or more analysed digital images and selectively removing defective elements from the visually rejected potatoes by cutting out the aforesaid defective elements, wherein the aforesaid one or more cutting means are brought into contact with the aforesaid, visually rejected potatoes.

2. A method according to claim 1, **characterised in that** the potatoes that have been subjected to step i) comprise potatoes whose skin has been removed, wherein removing the skin of the potatoes is preferably carried out by supplying steam.

3. A method according to any one or more of the preceding claims, **characterised in that** step iv) further comprises separating the defective elements cut away by the aforesaid one or more cutting means.

4. A method according to claim 3, **characterised in that** said separation is carried out by passing the thus additionally treated potatoes over a number of rollers positioned one behind another, wherein the interspace between the rollers is variable.

5. A method according to one or more of the preceding claims, **characterised in that** step iv) further comprises visually monitoring the thus additionally treated potatoes (again) and separating, on the basis of the visual monitoring step thus carried out, the defective elements that have been cut away by the aforesaid one or more cutting means.

6. A method according to any one or more of the preceding claims, **characterised in that** the one or more cutting means comprise one or more cutting dies, wherein the circumferential dimension of the one or more cutting means is larger than the circumferential dimension of the object to be cut.

7. A method according to claim 6, **characterised in that** the one or more cutting dies have a circular shape or that the one or more cutting dies are star-shaped, wherein preferably said circular shape is circumferentially provided with one or more projections.

8. A method according to one or more of claims 6-7, **characterised in that** the step of bringing the aforesaid one or more cutting means into contact with the aforesaid visually rejected potatoes is carried out in such a manner that the contact with cutting means of the circular cutting die type takes place at an earlier stage than the contact with cutting means of the type selected from star shape and circular shape circumferentially provided with one or more projections.

9. A method according to claim 8, **characterised in that** the step of bringing the cutting means of the star-shaped type into contact is carried out only on the defective elements that were previously cut away by the aforesaid one or more cutting means.

10. A method according to one or more of claims 6-7, **characterised in that** the step of bringing said one or more cutting means into contact with said visually rejected potatoes is carried out using one or more cutting dies of the circular type circumferentially provided with one or more projections.

11. A method according to any one or more of the preceding claims, **characterised in that** the defective elements to be removed are selected from the group of wireworms, rust, blackening, scab, eyes and combinations thereof, wherein said potato has been processed into one or more of slice, stick, cube and section.

12. A method according to any one or more of the preceding claims, **characterised in that** in step ia) the peeled or unpeeled potatoes are sliced or chipped before step ib) is carried out.

## Patentansprüche

1. Verfahren zur Bearbeitung von Kartoffeln, umfassend das Bereitstellen von Kartoffeln und das mögliche Entfernen der Schale von den genannten Kartoffeln, bevor die weitere Bearbeitung der Kartoffeln stattfindet, wobei das Verfahren die folgenden Schritte umfasst:
ia) Schneiden von Kartoffeln und Platzieren der somit geschnittenen Kartoffeln auf einem Förderband;
ib) visuelles Überprüfen der genannten geschnittenen Kartoffeln auf Mängel;
ii) Einstufen von Kartoffeln als visuell genehmigte Kartoffeln und visuell abgelehnte Kartoffeln auf Basis des Schritts ib);
iii) Trennen der visuell genehmigten Kartoffeln von den visuell abgelehnten Kartoffeln, wobei die genannte Trennung durch Entfernen der visuell abgelehnten Kartoffeln durch zu Seite Stoßen dieser unter Verwendung von Luft, einer Stoßstange, eines Wasserstrahls oder einer Kombination davon durchgeführt wird;
iv) Unterziehen der zuvor genannten visuell abgelehnten Kartoffeln einer weiteren Behandlung, umfassend das selektive Entfernen von mangelhaften Elementen von den visuell abgelehnte Kartoffeln unter Verwendung eines oder mehrerer aus der Gruppe von Wasserstrahl, Laserstrahl, Bohrer, Stanzwerkzeuge und Messer ausgewählter Schneidmittel, um zusätzlich behandelte Kartoffeln und mangelhafte Elemente aufweisende Kartoffeln zu erhalten;
v) Unterziehen der zuvor genannten zusätzlich behandelten Kartoffeln einer weiteren Bearbeitung, wobei Schritt iv) das Aufnehmen eines oder mehrerer digitaler Bilder von visuell abgelehnten Kartoffeln, das Analysieren des einen oder der mehreren digitalen Bilder, das Positionieren der Schneidmittel auf Basis des genannten einen oder der mehreren analysierten digitalen Bildern und das selektive Entfernen von mangelhaften Elementen von den visuell abgelehnten Kartoffeln durch Herausschneiden der zuvor genannten mangelhaften Elemente umfasst, wobei das zuvor genannte eine oder die zuvor genannten mehreren Schneidmittel in Kontakt mit den zuvor genannten visuell abgelehnten Kartoffeln gebracht werden.

2. Verfahren nach Anspruch 1,
**dadurch gekennzeichnet, dass**
die Kartoffeln, die Schritt i) unterzogen wurden, Kartoffeln umfassen, deren Schale entfernt worden ist, wobei das Entfernen der Schale der Kartoffeln vorzugsweise durch die Bereitstellung von Dampf durchgeführt wird.

3. Verfahren nach einem oder mehreren der vorherigen Ansprüche,
**dadurch gekennzeichnet, dass**
Schritt iv) ferner Trennen der durch das zuvor genannte eine oder die zuvor genannten mehreren Schneidmittel weg geschnittenen mangelhaften Elemente umfasst.

4. Verfahren nach Anspruch 3,
**dadurch gekennzeichnet, dass**
die genannte Trennung durch Leiten der auf diese Weise zusätzlich behandelten Kartoffeln über mehrere nacheinander positionierte Walzen durchgeführt wird, wobei der Zwischenraum zwischen den Walzen variabel ist.

5. Verfahren nach einem oder mehreren der vorherigen Ansprüche,
**dadurch gekennzeichnet, dass**
Schritt iv) ferner (nochmaliges) visuelles Überprüfen der auf diese Weise zusätzlich behandelten Kartoffeln und Trennen, auf Basis des demgemäß durchgeführten visuellen Überprüfungsschritts, der mangelhaften Elemente, die durch das zuvor genannte eine oder die zuvor genannten mehreren Schneidmittel weggeschnitten worden sind, umfasst.

6. Verfahren nach einem oder mehreren der vorherigen Ansprüche,
**dadurch gekennzeichnet, dass**
ein oder mehrere Schneidmittel ein oder mehrere Stanzwerkzeuge umfassen, wobei die Umfangsabmessung des einen oder der mehreren Schneidmittel größer als die Umfangsabmessung des zu schneidenden Objekts ist.

7. Verfahren nach Anspruch 6,
**dadurch gekennzeichnet, dass**
das eine oder die mehreren Stanzwerkzeuge eine runde Form aufweisen oder dass das eine oder die mehreren Stanzwerkzeuge sternförmig sind, wobei vorzugsweise die genannte runde Form umlaufend mit einem oder mehreren Vorsprüngen versehen ist.

8. Verfahren nach einem oder mehreren der Ansprüche 6 bis 7,
**dadurch gekennzeichnet, dass**
der Schritt des in Kontakt-Bringens des einen zuvor genannten oder der mehreren zuvor genannten Schneidmittel mit den zuvor genannten visuell abgelehnten Kartoffeln in einer solchen Weise durchgeführt wird, dass der Kontakt mit Schneidmitteln des runden Stanzwerkzeugtyps in einer früheren Stufe stattfindet als der Kontakt mit Schneidmitteln des aus Sternform und umlaufend mit einem oder mehreren Vorsprüngen versehener runder Form ausgewählten Typs.

9. Verfahren nach Anspruch 8,
**dadurch gekennzeichnet, dass**
der Schritt des in Kontakt-Bringens der Schneidmittel des sternförmigen Typs lediglich bei den mangelhaften Elementen, die zuvor durch das eine zuvor genannte oder die mehreren zuvor genannten Schneidmittel weggeschnitten wurden, durchgeführt wird.

10. Verfahren nach einem oder mehreren der Ansprüche 6 bis 7,
**dadurch gekennzeichnet, dass**
der Schritt des in Kontakt-Bringens des genannten einen oder der genannten mehreren Schneidmittel mit den genannten visuell abgelehnten Kartoffeln unter Verwendung eines oder mehrerer Stanzwerkzeuge des umlaufend mit einem oder mehreren Vorsprüngen versehenen runden Typs durchgeführt wird.

11. Verfahren nach einem oder mehreren der vorherigen Ansprüche,
**dadurch gekennzeichnet, dass**
die zu entfernenden mangelhaften Elemente aus der Gruppe von Drahtwürmern, Rost, Schwarzfärbung, Schorf, Augen und Kombinationen davon ausgewählt sind, wobei die genannte Kartoffel in ein/eine/einen oder mehrere Scheiben, Stifte, Würfel und/oder Teilstücke verarbeitet wurde.

12. Verfahren nach einem oder mehreren der vorherigen Ansprüche,
**dadurch gekennzeichnet, dass**
in Schritt ia) die geschälten oder ungeschälten Kartoffeln in Scheiben geschnitten oder klein geschnitten wurden, bevor Schritt ib) durchgeführt wird.

## Revendications

1. Procédé pour traiter des pommes de terre, comprenant la fourniture de pommes de terre et le retrait éventuel de la peau desdites pommes de terre avant qu'un traitement supplémentaire des pommes de terre n'ait lieu, lequel procédé comprend les étapes suivantes qui consistent :
ia) à découper les pommes de terre et à mettre lesdites pommes de terre ainsi découpées sur une bande transporteuse ;
ib) à surveiller visuellement lesdites pommes de terre découpées pour la détection de défauts ;
ii) à classer les pommes de terre en tant que pommes de terre approuvées visuellement et pommes de terre rejetées visuellement en se basant sur l'étape ib) ;
iii) à séparer les pommes de terre approuvées visuellement des pommes de terre rejetées visuellement, où ladite séparation est effectuée en retirant les pommes de terre rejetées visuellement en les poussant en utilisant de l'air, une tige de poussée, un jet d'eau ou une combinaison de ceux-ci ;
iv) à soumettre les pommes de terre rejetées visuellement susmentionnées à un traitement supplémentaire, comprenant le retrait sélectif d'éléments défectueux des pommes de terre rejetées visuellement en utilisant un ou plusieurs moyen(s) de découpage choisi(s) dans le groupe constitué par un jet d'eau, un jet laser, un foret, des emporte-pièces et un couteau de sorte à obtenir des pommes de terre traitées davantage et des pommes de terre comprenant des éléments défectueux ;
v) à soumettre les pommes de terre traitées davantage susmentionnées à un traitement supplémentaire, où l'étape iv) comprend le fait de prendre une ou plusieurs image(s) numérique(s) des pommes de terre rejetées visuellement, d'analyser la ou les plusieurs image(s) numérique(s), de positionner le moyen de découpage en se basant sur lesdites une ou plusieurs image(s) numérique(s) analysée(s) et de retirer de manière sélective des éléments défectueux des pommes de terre rejetées visuellement en découpant les éléments défectueux susmentionnés, où le ou les plusieurs moyen(s) de découpage susmentionné(s) est/sont mis en contact avec les pommes de terre rejetées visuellement susmentionnées.

2. Procédé selon la revendication 1, **caractérisé en ce que** les pommes de terre qui ont été soumises à l'étape i) comprennent des pommes de terre dont la peau a été retirée, où le fait de retirer la peau des pommes de terre est de préférence effectué en fournissant de la vapeur.

3. Procédé selon l'une quelconque ou plusieurs des revendications précédentes, **caractérisé en ce que** l'étape iv) comprend en outre le fait de séparer les éléments défectueux découpés par le ou les plusieurs moyen(s) de découpage susmentionné(s).

4. Procédé selon la revendication 3, **caractérisé en ce que** ladite séparation est effectuée en faisant passer les pommes de terre ainsi traitées davantage sur un certain nombre de rouleaux positionnés les uns derrière les autres, où l'espace intermédiaire entre les rouleaux est variable.

5. Procédé selon une ou plusieurs des revendications précédentes, **caractérisé en ce que** l'étape iv) comprend en outre le fait de surveiller visuellement les pommes de terre ainsi traitées davantage (à nouveau) et de séparer, en se basant sur l'étape de surveillance visuelle ainsi effectuée, les éléments défectueux qui ont été découpés par le ou les plusieurs moyen(s) de découpage susmentionné(s).

6. Procédé selon l'une quelconque ou plusieurs des revendications précédentes, **caractérisé en ce que** le ou les plusieurs moyen(s) de découpage comprend/comprennent un ou plusieurs emporte-pièce(s), où la dimension circonférentielle du ou des plusieurs moyen(s) de découpage est supérieure à la dimension circonférentielle de l'objet devant être découpé.

7. Procédé selon la revendication 6, **caractérisé en ce que** le ou les plusieurs emporte-pièce(s) a/ont une forme circulaire ou **en ce que** le ou les plusieurs emporte-pièce(s) est/sont sous la forme d'une étoile, où ladite forme circulaire est pourvue de préférence d'une ou de plusieurs saillies(s) sur la circonférence.

8. Procédé selon une ou plusieurs des revendications 6 et 7, **caractérisé en ce que** l'étape consistant à amener le ou les plusieurs moyen(s) de découpage susmentionné(s) en contact avec les pommes de terre rejetées visuellement susmentionnées est effectuée de sorte que le contact avec le moyen de découpage du type emporte-pièce circulaire ait lieu à un stade antérieur au contact avec le moyen de découpage du type choisi parmi la forme d'étoile et la forme circulaire pourvue d'une ou de plusieurs saillie(s) sur la circonférence.

9. Procédé selon la revendication 8, **caractérisé en ce que** l'étape consistant à amener le moyen de découpage du type en forme d'étoile en contact est effectuée uniquement sur les éléments défectueux qui ont été précédemment découpés par le ou les plusieurs moyen(s) de découpage susmentionné(s).

10. Procédé selon une ou plusieurs des revendications 6 et 7, **caractérisé en ce que** l'étape consistant à lesdits un ou plusieurs moyen(s) de découpage en contact avec lesdites pommes de terre rejetées visuellement est effectuée en utilisant un ou plusieurs emporte-pièce(s) du type circulaire pourvu(s) d'une ou de plusieurs saillie(s) sur la circonférence.

11. Procédé selon l'une quelconque ou plusieurs des revendications précédentes, **caractérisé en ce que** les éléments défectueux devant être retirés sont choisis dans le groupe constitué par des vers fil de fer, la rouille, le noircissement, la gale, les yeux et des combinaisons de ceux-ci, où ladite pomme de terre a été traitée en un(e) ou plusieurs parmi une tranche, un bâtonnet, un cube et un quartier.

12. Procédé selon l'une quelconque ou plusieurs des revendications précédentes, **caractérisé en ce que** dans l'étape ia) les pommes de terre pelées ou non pelées sont tranchées ou mises en morceaux avant que l'étape ib) ne soit effectuée.
